# EUROPÄISCHE PATENTSCHRIFT

(11) **EP 1 560 633 B1**
(45) Veröffentlichungstag und Bekanntmachung des Hinweises auf die Patenterteilung: **27.09.2006**
(21) Anmeldenummer: 03775286.2
(22) Anmeldetag: 04.11.2003
(51) Int. Cl.: B01D 25/21, B01D 25/28

(54) **MEMBRANFILTERPRESSE**
MEMBRANE FILTER PRESS
FILTRE PRESSE MEMBRANE

(30) Priorität: 12.11.2002 DE 10252922
(43) Veröffentlichungstag der Anmeldung: 10.08.2005
(73) Patentinhaber: JVK Filtration Systems GmbH, 91166 Georgensgmünd (DE)
(72) Erfinder: SALBAUM, Bernhard, 91187 Mühlstetten (DE); KNYE, Ulrich, 96515 Sonneberg (DE); HERMANN, Manfred, P., 90491 Nürnberg (DE)
(74) Vertreter: Tergau, Dietrich
(86) Internationale Anmeldenummer: PCT/EP2003/012269
(87) Internationale Veröffentlichungsnummer: WO 2004/043569

(56) Entgegenhaltungen:
- EP-A- 0 827 766
- WO-A-98/17367
- DE-A- 3 209 341
- US-A- 4 508 623
- US-B1- 6 387 282

## Beschreibung

Die Erfindung betrifft eine Membranfilterpresse, die in bekannter Weise mehrere Membranfilterplatten und dazwischen angeordnete membranfreie Filterplatten umfasst. Die Filterplatten sind im Betriebszustand zwischen einem Kopf- und einem Endstück eingespannt und sind so ausgestaltet, dass zwischen ihnen ein Filterraum angeordnet ist. Die den Filterraum begrenzenden Flächen der Filterplatten sind mit Noppen oder Rillen ausgestattet und sind mit einem Filtertuch belegt. Die genoppte oder gerillte Oberfläche wird bei den Membranfilterplatten durch eine flexible bzw. elastisch verformbare Membran aus Gummi oder Kunststoff gebildet. Die Rückseite der Membran ist zur Entfernung der Restfeuchtigkeit eines bei der Filtration im Filterraum gebildeten Filterkuchens mit einem Druckmedium beaufschlagbar.

Aus der EP-A-827 766 ist eine Membranplatte für eine Membranfilterpresse bekannt mit einer Grundplatte mit verdicktem Randbereich, einer elastisch verformbaren Membran und einem Filtertuch. Die Membran weist einen randseitigen, in einer komplementären Nut einliegenden Ringwulst zur Abdichtung auf. Ähnliche Membranplatten für Membranfilterpressen sind darüber hinaus bekannt aus der WO 98/17367, US-B-6,387,282 und US-A-4,508,623.

Bei der Druckbeaufschlagung der Membranrückseite mit einem Druckmedium kann es bei diesen bekannten Membranfilterplatten für Membranfilterpressen beispielsweise aufgrund eines durch Materialermüdung undichten Druckraumes zu einem ungenügenden Pressdruckaufbau kommen. Kann Druckmedium aus dem Druckraum entweichen, ist eine effektive Druckfiltration aufgrund des geringeren Pressdruckes nicht mehr möglich. Zudem kann dies zu einer Verunreinigung des Filtrats durch das Druckmedium führen.

Davon ausgehend ist es die Aufgabe der Erfindung, bei einer Membranfilterpresse einen sicheren Aufbau des erforderlichen Pressdruckes zu gewährleisten.

Diese Aufgabe wird durch eine Membranfilterpresse mit den Merkmalen des Anspruches 1 gelöst. Danach wird eine Membranfilterpresse vorgeschlagen, die wenigstens eine Membranfilterplatte, eine Grundplatte mit verdicktem Randbereich, eine Membran aus einem elastisch verformbaren Material und ein Filtertuch umfasst, wobei die Membran einen randständigen, in einer komplementär gestalteten Nut der Grundplatte einliegenden Ringwulst aufweist. Gleichzeitig ist in der Grundplatte eine Dichtnut eingelassen, die nach Art eines Bypasses beidendig in die Nut mündet. In die Dichtnut greift ein komplementär gestalteter, an den Ringwulst angeformter Dichtvorsprung dichtend ein. Dadurch, dass die Membran mit einem Dichtvorsprung in der genannten Dichtnut einliegt, ist ein durch rückseitige Druckbeaufschlagung der Membran bedingtes Abheben der Membran von der Grundplatte verhindert. Das Druckmedium kann nicht an der Trennfuge zwischen der Membraninnenseite und der Grundplatte über die Filtratablaufbohrung abfließen, sondern verbleibt sicher im Druckraum. Dadurch wird eine Verminderung des Pressdruckes auf die Membran ausgeschlossen. Der erforderliche Pressdruck kann sicher aufgebaut werden. Gleichzeitig wird durch das Abdichten des Druckraumes eine Verunreinigung des Filtrats mit Pressmedium verhindert.

In einer Ausführungsform der Erfindung nach Anspruch 2 ist zwischen der Nut und der Dichtnut wenigstens eine Filtratablaufbohrung in der Grundplatte vorhanden, die mit einer die Membran durchsetzenden Bohrung, die ebenfalls der Filtratabführung dient, in Verbindung steht. Damit wird ein sicherer Filtratablauf gewährleistet. Zugleich wird durch diese Maßnahme eine Abdichtung der Filtratablaufbohrung geschaffen.

Nach der Lehre des Anspruchs 3 weist die Membran einen randständigen, im Wesentlichen im Querschnitt schwalbenschwanzförmigen Ringwulst auf, der in einer komplementär gestalteten, in der Grundplatte angeordneten Nut einliegt. Gleiches gilt für das Zusammenspiel von Dichtvorsprung und Dichtnut. Durch die Schwalbenschwanzform wird eine besonders sichere Abdichtung erreicht.

Bei Filterpressen der genannten Art ist zudem die Fixierung des Filtertuchs bei tropfdichter Ausführung problematisch. Bekannt ist es beispielsweise, das Filtertuch zwischen zwei aneinanderliegenden Filterplatten nach außen zu führen, wobei es als Abdichtung der zwischen den Filterplatten vorhandenen Trennfuge dient. Oft sind die zwei einer Filterplatte zugeordneten Filtertücher mit ihren außerhalb der Filterplatten liegenden Rändern durch Schlaufen oder Klettverschluß miteinander verbunden. Eine solche Ausgestaltung ist nicht nur wegen der fehlenden Tropfdichtigkeit, sondern auch in hygienischer Hinsicht ungünstig. Über die Filtertücher können nämlich Mikroorganismen in die Filterpresse gelangen. Bei anderen Pressenausführungen ist das Filtertuch an dem sich an die Membran nach außen anschließenden Randbereich der Membranfilterplatte befestigt. Dies hat u.a. den Nachteil, dass aufgrund des dafür erforderlichen Platzbedarfes die Filtrationsfläche der Filterplatte verringert ist. Außerdem erfordert diese Art der Tuchbefestigung einen erhöhten Montageaufwand.

Aus diesem Grund wird in einer besonders vorteilhaften Ausführungsform der Erfindung nach Anspruch 4 eine Membran vorgeschlagen, in deren Ringwulst eine Fixiernut angeordnet ist, in der eine Fixierleiste einliegt. Das Filtertuch ist dabei mit seinem Randbereich mittel- oder unmittelbar an dieser Fixierleiste befestigt. Die Befestigung der Membran und des Filtertuchs sind auf diese Weise miteinander verknüpft, was die zur Fixierung notwendige Teileanzahl reduziert. Damit ist aber auch eine Montage- bzw. Demontageerleichterung verbunden. Außerdem erfordert diese Art der Tuchfixierung keinen Platzbedarf im Plattenrandbereich. Daher kann eine größere Membran mit entsprechend größerer Filtrationsnutzfläche eingesetzt und die Filtrationsleistung erhöht werden. Ein Eindringen hygienisch bedenklicher Keime über das Filtertuch ist verhindert. Durch diese Tuchbefestigung wird die Membranfilterplatte insbesondere hinsichtlich der Teileanzahl und des Montage- bzw. Demontageaufwandes verbessert.

Zweckmäßig ist ein quer zur Planebene der Grundplatte wirksamer Formschluss zwischen Fixiernut und Fixierleiste (Anspruch 5), weil dadurch eine besonders zuverlässige, insbesondere auch im geöffneten Zustand der Filterpresse wirksame Tuchfixierung gewährleistet ist. In diesem Sinne wirkt auch ein Kraftschluss zwischen den genannten Teilen, etwa durch Rückstellkräfte infolge einer Aufweitung der Fixiernut durch die Fixierleiste (Anspruch 6). Auf diese Weise wird auch eine hermetische, das Eindringen von Mikroorganismen verhindernde Abdichtung erreicht. Darüber hinaus wird der Ringwulst der Membran in der schwalbenschwanzförmigen Nut der Grundplatte verkeilt und die Klemmwirkung der das Filtertuch haltenden Fixierleiste erhöht. Gleichzeitig erfolgt im Fixierbereich eine das Eindringen von Mikroorganismen verhindernde Abdichtung, die insbesondere dann unumgänglich ist, wenn eine Filterpresse zur Herstellung von Lebensmitteln, pharmazeutischen Produkten oder toxischen Stoffen eingesetzt wird.

Der in Rede stehende Fixierbereich ist in einem weiteren Ausführungsbeispiel der Erfindung nach Anspruch 7 vorzugsweise so ausgestattet, dass die Fixierleiste und das Filtertuch im Bereich des Membranwulstes die vom Randbereich der Grundplatte aufgespannte Planebene nicht überragen. Dadurch ist gewährleistet, dass Filtertuch und Fixierleiste die gegenseitige Anlage von Filterplatten mit ihrem Randbereich nicht behindern, so dass eine gegenseitige hermetische Abdichtung der Filterplatten, etwa durch Zwischenlage eines Dichtringes, auf einfache Weise möglich ist.

Die bei dem in Anspruch 8 gelehrten Ausführungsbeispiel gezeigte Maßnahme, dass die Fixierleiste die Fixiernut im Wesentlichen vollständig ausfüllt, zielt daraufhin ab, mit Mikroorganismen kontaminierbare Spalträume zu vermeiden.

Wie bereits oben erwähnt, findet die Abdichtung der Filterpresse nach außen im Bereich des Randbereiches der Filterplatten statt. Vorzugsweise ist nun die Membranwulst mit einer die Fixiernut umfassenden, also radial außerhalb der Fixiernut liegenden Dichtlippe versehen, die über die von dem Grundplattenrandbereich aufgespannte Planebene hinaussteht (Anspruch 9). Die Dichtlippe kann daher mit einer Gegenplatte im Sinne einer hermetischen Abdichtung zusammenwirken. Auf zusätzliche konstruktive Maßnahmen wie das Einbringen einer Dichtnut in die Filterplatte und das Einlegen einer Dichtschnur kann daher verzichtet werden. Der Ringwulst der Membran hat somit eine Dreifachfunktion: Er dient der Befestigung der Membran und gleichzeitig des Filtertuchs und gewährleistet darüber hinaus eine Abdichtung der Filterkammer und des Raumes hinter den Membranen nach außen. Die für eine Membranfilterplatte notwendige Teilezahl ist dadurch nochmals reduziert. Dementsprechend gering ist der Herstellungsaufwand und der Aufwand für die Montage- und Demontage des Filtertuchs und der Membran.

Die Ansprüche 10 bis 13 betreffen weitere Ausführungsbeispiele der Erfindung mit verschiedenen Möglichkeiten der Fixierung des Filtertuches.

Die Erfindung wird nun anhand von in den beigefügten Zeichnungen dargestellten Ausführungsbeispielen näher erläutert. Es zeigen:
- Fig. 1: die Draufsicht auf den Eckbereich einer Membranfilterplatte mit abgenommener Membrane,
- Fig. 2: einen Querschnitt entsprechend Linie II-II in Fig. 1,
- Fig. 3: eine Querschnittsdarstellung entsprechend Fig. 2, die den Eckbereich einer Membranplatte und einer membranlosen Zwischenplatte zeigt,
- Fig. 4: das Detail IV aus Fig. 3,
- Fig. 5: das Detail V aus Fig. 3,

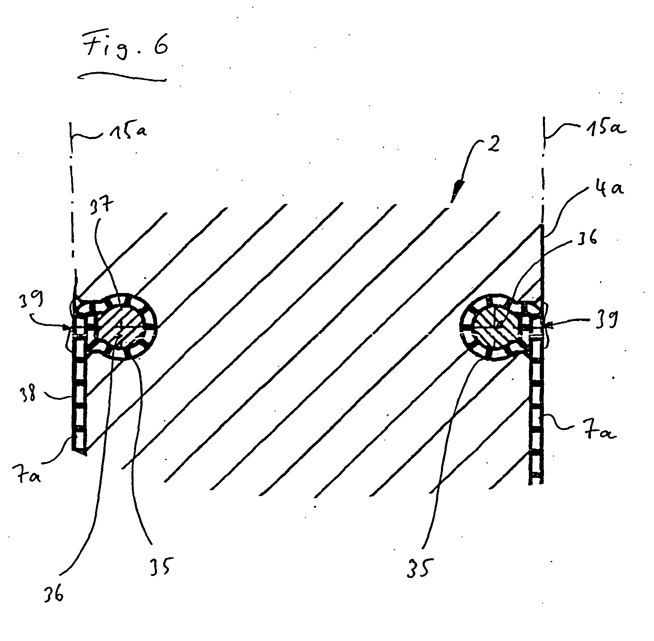

- Fig. 6: den Ausschnitt VI aus Fig. 3 und
- Fig. 7: die Draufsicht auf eine anders gestaltete Membranplatte mit daran befestigter Membran.

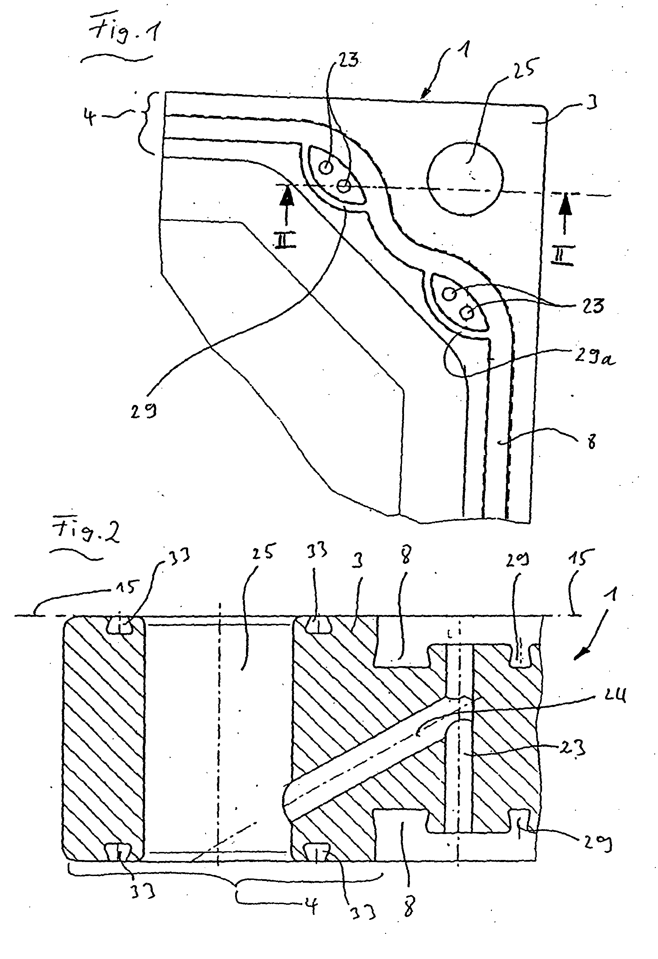

Eine Filterpresse der in Rede stehenden Art setzt sich im Wesentlichen aus mehreren Membranfilterplatten 1 und jeweils zwischen zwei Membranfilterplatten angeordneten membranlosen Zwischenplatten 2 zusammen. Wie insbesondere aus Fig. 1 - 3 ersichtlich ist, umfasst eine Membranfilterplatte 1 eine Grundplatte 3 mit einem verdickten Randbereich 4, eine an der Grundplatte 3 fixierte, auf ihrer Außenseite Noppen 5 aufweisende Membran 6 und ein Filtertuch 7. Die Zwischenplatten 2 weisen ebenfalls einen verdickten Randbereich 4a auf. Die genannten Platten sind im Betriebszustand zwischen ein Kopf- und ein Endstück (nicht dargestellt) eingespannt, wobei sie mit ihren Randbereichen 4, 4a aneinanderliegen. Die sich an den Randbereich 4,4a radial nach innen anschließenden Plattenbereiche sind nach innen eingezogen, so dass sich zwischen zwei miteinander zusammenwirkenden Platten ein Filterraum 11 (Fig. 3) bildet. Zur Fixierung der Membran 6 an der Grundplatte 3 ist eine im Querschnitt schwalbenschwanzförmige Aufnahmeausnehmung bzw. Nut 8 in deren Randbereich 4 angeordnet. Die Nut 8 erstreckt sich in Umfangsrichtung über den gesamten Randbereich, ist also ringförmig ausgebildet. Die Membran 6 weist einen randständigen Ringwulst 9 auf, der eine der Nut 8 im Wesentlichen entsprechende Querschnittsform hat und der in der Nut 8 formschlüssig einliegt. Das Einsetzen der Membran 6 in die Nut 8 erfolgt dabei unter elastischer Verformung der aus einem gummiähnlichen oder aus einem elastischen Kunststoff bestehenden Membran 6. Die dadurch hervorgerufenen Rückstellkräfte bewirken einen Kraftschluss zwischen Ringwulst 9 und Nut 8.

Von der die Noppen 5 tragenden Außenseite der Membran 6 her ist in den Ringwulst 9 eine Fixiernut 10 eingelassen, die sich zu Ihrem Nutgrund hin erweitert. Diese Erweiterung kann derart sein, dass die Nutwände 12 zunächst parallel zueinander verlaufen und dann in einen im Querschnitt etwa kreisförmigen Abschnitt 13 übergehen. In der Fixiernut 10 liegt eine Fixierleiste 14 ein, die einen dem Nutquerschnitt entsprechende Querschnittsform aufweist. Die Querschnittsabmessungen der Fixierleiste sind dabei derart, dass sie unter elastischer Aufweitung des Ringwulstes 9 in der Fixiernut 10 einliegen. Auf diese Weise wird die Festigkeit der Verbindung zwischen der Membran 6 und der Grundplatte 3 einerseits und zwischen der Fixierleiste 14 und der Fixiernut 10 andererseits erhöht. An der Fixierleiste 14 ist das Filtertuch 7 fixiert, so dass auf die geschilderte Weise auch die Festigkeit der Verbindung zwischen Filtertuch 7 und Membran 6 erhöht wird. Die Fixierleiste 14 füllt die Fixiernut 10 im Wesentlichen vollständig aus, wodurch Spalte bzw. Toträume vermieden werden, die die Gefahr der Ansammlung von Schmutz und Mikroorganismen in sich bergen.

Das Filtertuch 7 und die Fixierleiste 14 sind so angeordnet, dass sie zunächst im geschlossenen Zustand der Filterpresse über die vom Randbereich 4 der Grundplatte aufgespannte Planebene 15 nicht hinausragen. Dadurch ist gewährleistet, dass allein der Randbereich 4 die gegenseitige Plananlage der Filterplatten und eine evtl. dort notwendige Abdichtungsfunktion übernimmt. Die Abdichtungsfunktion zwischen den aneinanderliegenden Filterplatten wird durch den Ringwulst 9 übernommen, so dass auf zusätzliche Abdichtungsmaßnahmen, d. h. also Nuten im Randbereich und entsprechende Dichtungsringe verzichtet werden kann. Dazu ist die radial außenliegende Wand 16 des Ringwulstes 9 zu einer Dichtlippe 17 verlängert, die die Planebene 15 überragt. Im Betriebszustand steht die Dichtlippe 17 an dem Randbereich einer Gegenplatte, etwa einer Zwischenplatte 2 an und bildet eine konstruktiv einfache und wirkungsvolle Abdichtung der Membranfilterpresse.

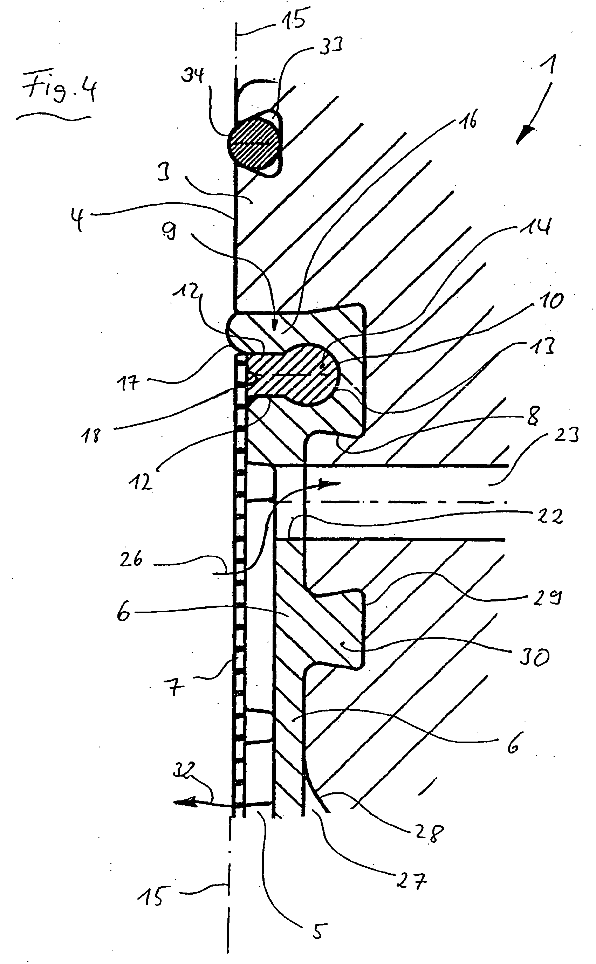

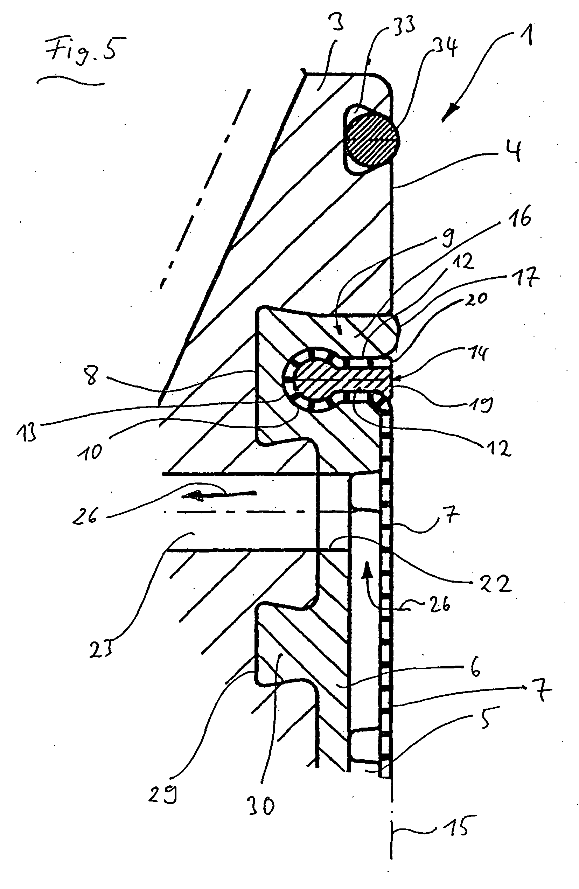

Das Filtertuch 7 kann auf unterschiedliche Weise an der Fixierleiste 14 fixiert sein. Bei dem Ausführungsbeispiel nach Fig. 4 bildet die die Fixiernut 10 überdeckende Oberseite der unter elastischer Aufweitung in der Fixiernut 10 einliegenden Fixierleiste 14 eine Haftfläche 18, mit der das Filtertuch 7 mit seinem Randbereich verklebt ist. Die Verbindung zwischen Filtertuch 7 und Haftfläche 18 kann aber auch durch eine Verschweißung erfolgen, etwa wenn beide Teile aus miteinander verschweißbaren Kunststoffen bestehen. Bei der in Fig. 5 dargestellten Befestigungsart ist das Filtertuch 7 zwischen die Fixierleiste 14 und die Wandung der Fixiernut 10 eingelegt. Die Fixierleiste 14 ist so bemessen, dass der Ringwulst 9 radial aufgeweitet ist und dementsprechend sowohl das Filtertuch 7 als auch die Fixierleiste 14 durch die Rückstellkräfte des Ringwulstmaterials in der Fixiernut festgeklemmt sind. Weiterhin ist die Oberseite 19 der Fixierleiste 14 in der Planebene 15 angeordnet. Die Kantenfläche 20 des in der Fixiernut 10 einliegenden Filtertuchs 7 schließt ebenfalls bündig mit der Planebene 15 ab. Auf diese Weise wird im Bereich des Ringwulstes 9 eine relativ ebene und im Wesentlichen von Spalten freie flächige Anordnung geschaffen.

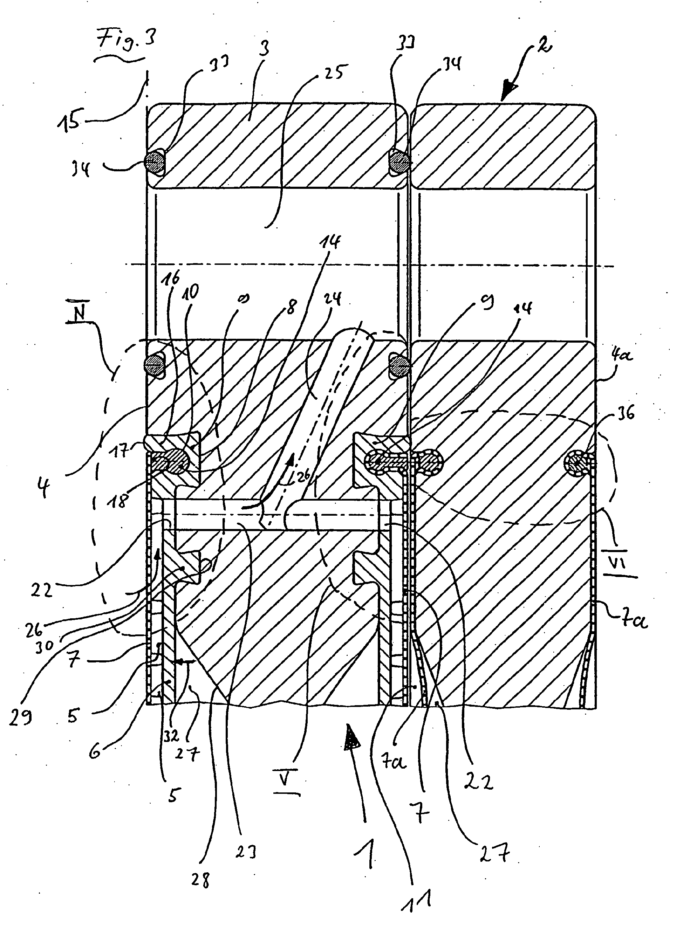

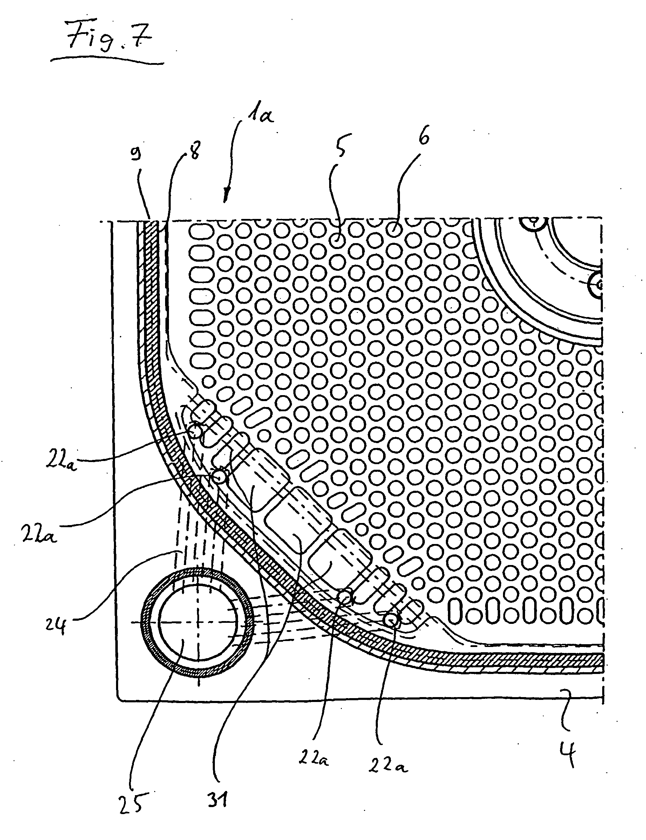

Um einen Filtratablauf zu gewährleisten, weist die Membran 6 mehrere, nahe dem Ringwulst 9 angeordnete Bohrungen 22 auf, die mit einer die Grundplatte 3 quer durchsetzenden Filtratablaufbohrung 23 fluchten bzw. in fluidischer Verbindung stehen. Die Filtratablaufbohrung 23 ihrerseits ist über eine Verbindungsbohrung 24 mit einem im Eckbereich der Grundplatte 3 angeordneten Filtratkanal 25 (Fig. 1 und 2) verbunden. Das sich zwischen dem Filtertuch 7 und der Membran 6 bzw. zwischen dessen Noppen 5 ansammelnde Filtrat kann daher über die genannten Bohrungen in Pfeilrichtung 26 abfließen. Um eine Abdichtung des zwischen der Membran 6 und dem nach innen eingezogenen Grundplattenbereich 28 vorhandenen und zum Auspressen eines Filterkuchens mit Druck beaufschlagbaren Druckraums 27 gegenüber der Filtratablaufbohrung zu gewährleisten, sind im Randbereich der Grundplatte 3 zwei im Querschnitt schwalbenschwanzförmige Dichtnuten 29, 29a eingelassen. Die Dichtnuten 29, 29a sind dabei in einem von der Nut 8 umgrenzten inneren Bereich der Grundplatte 3 angeordnet. Die Dichtnuten münden jeweils beidendig nach Art eines By-passes in die Nut 8. In den Dichtnuten 29, 29a liegt jeweils ein im Querschnitt komplementär ausgestalteter, an den Ringwulst 9 angeformter Dichtvorsprung 30 formschlüssig und vorzugsweise unter elastischer Vorspannung ein. Durch die geschilderte Ausgestaltung ist verhindert, dass sich die Membran bei Druckbeaufschlagung des Druckraumes 27 von der Grundplattenoberfläche in Pfeilrichtung 32 (Fig. 3 und 4) abhebt, so dass Druckmedium über den zwischen Membran 6 und Grundplatte 3 vorhandenen Spaltraum in die Filtratablaufbohrung 23 gelangen kann, was den Aufbau eines erforderlichen Pressdruckes behindern und außerdem dazu führen würde, dass Druckmedium in das Filtrat gelangt. Bei der in Fig. 7 dargestellten Membranfilterplatte 1 a mit daran fixierter Membrane 6 fehlt die eben geschilderte, zusätzliche Abdichtung der Bohrungen 22a. Ein Abheben der Membran im Falle einer rückseitigen Druckbeaufschlagung durch ein Druckmedium ist hier dadurch verhindert, dass sich die Membrane in dem den Bohrungen 22a zugeordneten Bereich mit Stütznoppen 31 an einer Gegenplatte, also etwa einer Zwischenplatte 2 abstützt.

Der den Filtratablaufkanal 25 umgebende Randbereich der Grundplatte 3 weist eine ringförmige, im Querschnitt schwalbenschwanzförmige Nut 33 auf, in der ein Dichtring 34 zur Abdichtung des Filtratablaufkanals 25 einliegt.

In der Zwischenplatte 2 sind beidseitig ähnlich der Fixiernut 10 der Membranfilterplatten 1 ausgestaltete Nuten 35 eingelassen, in denen unter Zwischenlage des Filtertuches 7a im Querschnitt im Wesentlichen kreisförmige Klemmleisten 36 einliegen. Das Ende des Filtertuches 7a ist zu einem Hohlsaum 37 vernäht, der die Klemmleiste 36 umfasst. Eine solche Ausgestaltung ist auch bei der Fixierleiste 14 und dem Filtertuch 7 der Membranfilterplatte 1 möglich. Die Tiefe der Nut 35, die Querschnittsabmessungen der Klemmleiste 36 und die Dicke des Filtertuches 7a sind so bemessen, dass die Außenseite 38 des Filtertuches mit der von dem Randbereich 4a aufgespannten Planebene 15a fluchtet bzw. über diese im Wesentlichen nicht hinausragt. Die zur Bildung des Hohlsaumes 37 erforderliche Doppellage 39 des Filtertuchs 7a ist dabei im Bereich der Nut 35 angeordnet.

### Bezugszeichenliste

- 1: Membranfilterplatte
- 1 a: Membranfilterplatte
- 2: Zwischenplatte
- 3: Grundplatte
- 4: Randbereich
- 4a: Randbereich
- 5: Noppe
- 6: Membrane
- 7: Filtertuch
- 8: Nut
- 9: Ringwulst
- 10: Fixiernut
- 11: Filterraum
- 12: Nutwand
- 13: Abschnitt
- 14: Fixierleiste
- 15: Planebene
- 15a: Planebene
- 16: Wand
- 17: Dichtlippe
- 18: Haftfläche
- 19: Oberseite
- 20: Kantenfläche
- 22: Bohrung
- 22a: Bohrung
- 23: Filtratablaufbohrung
- 24: Verbindungsbohrung
- 25: Filtratkanal
- 26: Pfeil
- 27: Druckraum
- 28: Grundplattenbereich
- 29: Dichtnut
- 29a: Dichtnut
- 30: Dichtvorsprung
- 31: Stütznoppe
- 32: Pfeil
- 33: Nut
- 34: Dichtring
- 35: Nut
- 36: Klemmleiste
- 37: Hohlsaum
- 38: Außenseite
- 39: Doppellage

## Patentansprüche

1. Membranfilterpresse mit wenigstens einer Membranfilterplatte (1), die eine Grundplatte (3) mit verdicktem Randbereich (4), eine Membran (6) aus einem elastisch verformbaren Material und ein Filtertuch (7) umfasst, wobei die Membran (6) einen randständigen, in einer komplementär gestalteten Nut (8) der Grundplatte einliegenden Ringwulst (9) aufweist,
**gekennzeichnet durch**
eine in einem von der Nut (8) umgrenzten inneren Bereich der Grundplatte (3) eingelassene Dichtnut (29), die nach Art eines Bypasses beidendig in die Nut (8) mündet und in der ein komplementär gestalteter, an den Ringwulst (9) angeformter Dichtvorsprung (30) formschlüssig einliegt.

2. Membranfilterpresse nach Anspruch 1,
**dadurch gekennzeichnet,**
**dass** in dem von der Nut (8) und der Dichtnut (29) umgrenzten Grundplattenbereich wenigstens eine Filtratablaufbohrung (23) vorhanden ist, die mit einer die Membran (6) durchsetzenden Bohrung (22) in Verbindung steht.

3. Membranfilterpresse nach Anspruch 1 oder 2,
**dadurch gekennzeichnet,**
**dass** Ringwulst (9) und/oder Dichtnut (29) einen im Wesentlichen schwalbenschwanzförmigen Querschnitt aufweisen.

4. Membranfilterpresse nach einem der Ansprüche 1 bis 3,
**gekennzeichnet durch**
eine in dem Ringwulst (9) angeordnete Fixiernut (10) und eine darin einliegende Fixierleiste (14), an der das Filtertuch (7) mit seinem Randbereich mittel- oder unmittelbar befestigt ist.

5. Membranfilterpresse nach Anspruch 4,
**dadurch gekennzeichnet,**
**dass** die Fixierleiste (14) mit einem quer zur Planebene der Grundplatte (3) wirksamen Formschluss in der Fixiernut (10) einliegt.

6. Membranfilterpresse nach Anspruch 4 oder 5,
**dadurch gekennzeichnet,**
**dass** die Fixierleiste (14) kraftschlüssig in der Fixiernut (10) einliegt.

7. Membranfilterpresse nach einem der Ansprüche 4 bis 6,
**dadurch gekennzeichnet,**
**dass** die Fixierleiste (14) und das Filtertuch (7) im Bereich des Ringwulstes (9) so angeordnet sind, dass sie die von dem Randbereich (4) der Grundplatte (3) aufgespannte Planebene (15) nicht überragen.

8. Membranfilterpresse nach Anspruch 4 bis 7,
**dadurch gekennzeichnet,**
**dass** die Fixierleiste (14) die Fixiernut (10) im Wesentlichen vollständig ausfüllt.

9. Membranfilterpresse nach einem der Ansprüche 4 bis 8,
**dadurch gekennzeichnet,**
**dass** der Ringwulst (9) mit einer die Fixiernut (10) umfassenden Dichtlippe (17) über die vom Grundplattenrandbereich (4) aufgespannte Planebene (15) hinaussteht.

10. Membranfilterpresse nach einem der Ansprüche 4 bis 9,
**dadurch gekennzeichnet,**
**dass** das Filtertuch (7) mit seinem Rand zwischen der Fixierleiste (14) und der Fixiernut (10) eingeklemmt ist.

11. Membranfilterpresse nach einem der Ansprüche 4 bis 10,
**dadurch gekennzeichnet,**
**dass** die Fixierleiste (14) in dem als Hohlsaum (37) ausgebildeten Rand des Filtertuchs (7a) einliegt.

12. Membranfilterpresse nach einem der Ansprüche 4 bis 11,
**dadurch gekennzeichnet,**
**dass** das Filtertuch (7) mit seinem Rand mit einer Haftfläche (18) der Fixierleiste (14) stoffschlüssig verbunden, insbesondere verklebt ist.

13. Membranfilterpresse nach Anspruch 12,
**dadurch gekennzeichnet,**
**dass** die Haftfläche (18) parallel zur Planebene (15) verläuft und mit dem sich von ihr nach innen wegerstreckenden Bereich des Membranwulstes (9) fluchtet.

## Claims

1. Membrane filter press with at least one membrane filter plate (1) which comprises a baseplate (3) with a thickened edge region (4), a membrane (6) consisting of an elastically deformable material and a filter cloth (7), the membrane (6) having an edge-standing annular bead (9) seated in a complementarily configured groove (8) of the baseplate, **characterized by** a sealing groove (29) which is introduced in an inner region of the baseplate (3) bordered by the groove (8) and which issues into the groove (8) at both ends in the manner of a bypass and in which a complementarily configured sealing projection (30) integrally formed onto the annular bead (9) is seated with a form fit.

2. Membrane filter press according to Claim 1, **characterized in that**, in the baseplate region bordered by the groove (8) and the sealing groove (29), there is at least one filtrate run-off bore (23) which is connected to a bore (22) passing through the membrane (6).

3. Membrane filter press according to Claim 1 or 2, **characterized in that** the annular bead (9) and/or sealing groove (29) have an essentially dovetail-shaped cross section.

4. Membrane filter press according to one of Claims 1 to 3, **characterized by** a fixing groove (10) arranged in the annular bead (9) and by a fixing strip (14) which is seated in said fixing groove and to which the filter cloth (7) is fastened indirectly or directly with its edge region.

5. Membrane filter press according to Claim 4, **characterized in that** the fixing strip (14) is seated in the fixing groove (10) with a form fit effective transversely with respect to the plane of the baseplate (3).

6. Membrane filter press according to Claim 4 or 5, **characterized in that** the fixing strip (14) is seated in the fixing groove (10) with a force fit.

7. Membrane filter press according to one of Claims 4 to 6, **characterized in that** the fixing strip (14) and the filter cloth (7) are arranged in the region of the annular bead (9) in such a way that they do not project beyond the plane (15) spanned by the edge region (4) of the baseplate (3).

8. Membrane filter press according to Claims 4 to 7, **characterized in that** the fixing strip (14) fills the fixing groove (10) essentially completely.

9. Membrane filter press according to one of Claims 4 to 8, **characterized in that** the annular bead (9) projects with a sealing lip (17) surrounding the fixing groove (10) beyond the plane (15) spanned by the baseplate edge region (4).

10. Membrane filter press according to one of Claims 4 to 9, **characterized in that** the filter cloth (7) is clamped with its edge between the fixing strip (14) and the fixing groove (10).

11. Membrane filter press according to one of Claims 4 to 10, **characterized in that** the fixing strip (14) is seated in the edge of the filter cloth (7a), said edge being designed as a hemstitch (37).

12. Membrane filter press according to one of Claims 4 to 11, **characterized in that** the filter cloth (7) is connected in a materially integral manner, in particular glued, with its edge to an adhesive face (18) of the fixing strip (14).

13. Membrane filter press according to Claim 12, **characterized in that** the adhesive face (18) runs parallel to the plane (15) and is in alignment with that region of the membrane bead (9) which extends inwards away from said plane.

## Revendications

1. Filtre-presse à membrane comprenant au moins une plaque ou un plateau de filtre à membrane (1), qui comprend une plaque de base (3) avec une zone de bordure (4) plus épaisse, une membrane (6) en un matériau déformable élastiquement et une toile de filtre (7), la membrane (6) présentant un bourrelet annulaire (9) de bordure, qui est encastré dans une rainure (8) de forme complémentaire de la plaque de base,
**caractérisé par** une rainure d'étanchéité (29) creusée dans une zone de la plaque de base (3), intérieure à la rainure (8) et entourée par celle-ci, ladite rainure d'étanchéité débouchant à chaque extrémité dans la rainure (8), à la manière d'une dérivation, et une protubérance d'étanchéité (30) formée avec le bourrelet annulaire (9), de forme complémentaire à celle de ladite rainure d'étanchéité, s'encastrant par complémentarité de forme dans cette dernière.

2. Filtre-presse à membrane selon la revendication 1,
**caractérisé en ce que** dans la zone de plaque de base, entourée et délimitée par la rainure (8) et la rainure d'étanchéité (29), existe au moins un alésage d'évacuation de filtrat (23) qui est en communication avec un perçage (22) traversant la membrane (6).

3. Filtre-presse à membrane selon la revendication 1 ou 2,
**caractérisé en ce que** le bourrelet annulaire (9) et/ou la rainure d'étanchéité (29) présentent une section transversale sensiblement en forme de queue d'aronde.

4. Filtre-presse à membrane selon l'une des revendications 1 à 3,
**caractérisé par** une rainure de fixation (10) placée dans le bourrelet annulaire (9) et dans laquelle est encastrée une barrette de fixation (14) sur laquelle est fixée directement ou indirectement la toile de filtre (7) avec sa zone de bordure.

5. Filtre-presse à membrane selon la revendication 4,
**caractérisé en ce que** la barrette de fixation (14) est encastrée dans la rainure de fixation (10) par une liaison par complémentarité de forme agissant transversalement par rapport au plan frontal formé par la plaque de base (3).

6. Filtre-presse à membrane selon la revendication 4 ou 5,
**caractérisé en ce que** la barrette de fixation (14) est encastrée par une liaison par adhérence dans la rainure de fixation (10).

7. Filtre-presse à membrane selon l'une des revendications 4 à 6,
**caractérisé en ce que** la barrette de fixation (14) et la toile de filtre (7) sont agencées de manière telle dans la zone du bourrelet annulaire (9), qu'elles ne dépassent pas du plan frontal (15) défini par la zone de bordure (4) de la plaque de base (3).

8. Filtre-presse à membrane selon l'une des revendications 4 à 7,
**caractérisé en ce que** la barrette de fixation (14) remplit sensiblement entièrement la rainure de fixation (10).

9. Filtre-presse à membrane selon l'une des revendications 4 à 8,
**caractérisé en ce que** le bourrelet annulaire (9) dépasse, avec une lèvre d'étanchéité (17) entourant la rainure de fixation (10), hors du plan frontal (15) défini par la zone de bordure (4) de la plaque de base.

10. Filtre-presse à membrane selon l'une des revendications 4 à 9,
**caractérisé en ce que** la toile de filtre (7) est enserrée avec son bord entre la barrette de fixation (14) et la rainure de fixation (10).

11. Filtre-presse à membrane selon l'une des revendications 4 à 10,
**caractérisé en ce que** la barrette de fixation (14) est encastrée dans la bordure de la toile de filtre (7a), qui est conformée en ourlet creux (37).

12. Filtre-presse à membrane selon l'une des revendications 4 à 11,
**caractérisé en ce que** la toile de filtre (7) est reliée par sa bordure à une surface d'adhérence (18) de la barrette de fixation (14), au moyen d'une liaison par continuité de matière, notamment d'un collage.

13. Filtre-presse à membrane selon la revendication 12,
**caractérisé en ce que** la surface d'adhérence (18) s'étend parallèlement au plan frontal (15) et est alignée avec la zone du bourrelet de membrane (9) qui s'étend à partir de ce plan vers l'intérieur.
